(19) **Europäisches Patentamt / European Patent Office / Office européen des brevets**

(11) **EP 4 285 140 B1**

(12) **EUROPEAN PATENT SPECIFICATION**

(45) Date of publication and mention
of the grant of the patent:
**26.11.2025  Bulletin 2025/48**

(21) Application number: **21745775.3**

(22) Date of filing: **15.07.2021**

(51) International Patent Classification (IPC):
*H01Q 1/32* (2006.01)    *G01S 7/40* (2006.01)
*G01S 13/931* (2020.01)    *H01Q 15/18* (2006.01)
*G01R 29/08* (2006.01)

(52) Cooperative Patent Classification (CPC):
**G01S 7/4082; G01S 7/4086; G01S 13/931;
H01Q 15/18;** H01Q 1/3233

(86) International application number:
**PCT/EP2021/069751**

(87) International publication number:
**WO 2023/284964 (19.01.2023 Gazette 2023/03)**

(54) **DEVICE FOR DETERMINING AN ANGULAR RESOLUTION OF A RADAR**

VORRICHTUNG ZUR BESTIMMUNG EINER WINKELAUFLÖSUNG EINES RADARS

DISPOSITIF DE DÉTERMINATION D'UNE RÉSOLUTION ANGULAIRE D'UN RADAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.12.2023  Bulletin 2023/49**

(73) Proprietor: **Shenzhen Yinwang Intelligent
Technologies Co., Ltd.
Shenzhen City, Guangdong 518129 (CN)**

(72) Inventors:
• **DUQUE BIARGE, Sergio
80992 Munich (DE)**
• **VASANELLI, Claudia
80992 Munich (DE)**
• **PEREZ MONJAS, Alberto
80992 Munich (DE)**
• **TEJERO ALFAGEME, Simon
80992 Munich (DE)**

(74) Representative: **Gill Jennings & Every LLP
The Broadgate Tower
20 Primrose Street
London EC2A 2ES (GB)**

(56) References cited:
CN-A- 108 919 215    CN-A- 111 645 090
CN-U- 208 060 700

## Description

TECHNICAL FIELD

The present disclosure relates to radar technology in general. For example, the present disclosure relates to a device for determining and validating the angular resolution of a radar under test.

BACKGROUND

Automotive radar systems need to deliver enhanced performance to be able to perceive different objects on the streets and to create a high-quality traffic map accordingly. Among various situations, resolving stationary objects is particularly critical, as state-of-the-art radar systems are usually not able to distinguish two stationary adjacent objects located at the same distance from the radar systems, which could lead to a potential hazard situation.

Contemporary radars require improved performance to reach autonomous driving levels. One of the most important abilities especially for imaging radars is angular resolution, defined as the capability to detect two objects at the same distance and with the same velocity as separated. A considerable amount of resources is being invested to develop a radar system with outstanding angular performance. As a matter of fact, such a radar system requires a robust and accurate validation process on determining its angular resolution. It is considerably more efficient if the validation process starts in the early stage of the radar development.

As a contemporary automotive imaging radar requires high-performance capabilities, especially in the angular domain, complex procedures to validate the angular resolution of the automotive imaging radar are required.

A conventional approach to validating the angular resolution of an automotive imaging radar would be to place two corner reflectors in a parking area or in an anechoic chamber at the same distance from a Radar Under Test (RUT), laterally separated according to the desired angular separation with a person moving the corners depending on the required scenario.

However, such an approach has a disadvantage in that the angular performance of the radar system under test would not be evaluated robustly. Moving the corner reflectors manually towards or away from the RUT could not deliver adequate performance, because the required accuracy to position the reflectors at several phase differences is in the order of micrometers which is unfeasible for manual setups.

Additionally, the conventional approach does not allow for a reproducible validation setup, because it is almost impossible to exactly replicate a previous setup and to allocate the corner reflectors exactly at the same positions as the previous setup. Also, the conventional approach is time consuming, as positioning the corner reflectors with a particular distance requires considerable human efforts to move the corner reflectors accordingly, with a poor accuracy as aforementioned.

In view of the above, there is a need to address the aforementioned technical drawbacks in existing devices for angular resolution of a radar.

CN208060700U discloses a floor rail type vehicle backing radar calibration system. CN111645090A discloses a radar angular resolution test system.

SUMMARY

Devices and methods according to this disclosure facilitate determination of an angular resolution of a radar in a robust and efficient manner.

The foregoing and other objects are achieved by the subject matter of the independent claims. Further implementation forms are apparent from the dependent claims, the description and the figures.

Generally, implementations described in this disclosure provide an improved device comprising a plurality of corner reflectors, several motors and a controller for determining the angular resolution of a radar under test (RUT).

In order to validate the Direction of Arrival (DoA) algorithm and an antenna layout of a radar that separates two targets (i.e. reflectors) positioned in the same range with same velocity, the phase difference between the targets is a crucial parameter. The phase difference varies in terms of lambda, which for certain radar applications is in the magnitude of micrometers and it depends on the detection range from the targets to the RUT.

In practical terms, this parameter cannot be controlled because the lambda magnitude is extremely short; therefore, this is considered random with uniform distribution. Nevertheless, in order to validate the robustness of the DoA algorithms, the device according to implementations disclosed herein is able to evaluate angular resolution capability of the RUT across a plurality of potential phase difference values.

In this regard, the device according to implementations disclosed herein is able to position corner reflectors with several phase differences in the order of micrometers, which is completely impractical for manual setups. Furthermore, the device according to implementations disclosed herein can measure many different scenarios (defined as setups with different distances between corner reflectors). In contrast, the conventional approach to validating the angular resolution of a radar system is much more time consuming, as every displacement between corner reflectors requires considerable human efforts to move them accordingly, with the extremely poor accuracy.

According to a claim 1, a device for determining an angular resolution of a radar comprises: a plurality of corner reflectors, comprising a first and a second corner reflector, configured to reflect electromagnetic waves from the radar along a reflection direction towards the radar; a first motor configured to adjust the position of at least one of the first and the second corner reflector for changing a first distance between the first and second corner reflectors in a first motion direction perpendicular to the reflection direction towards the radar; a second motor configured to adjust the position of at least one of the first and the second corner reflector for changing a second distance between the first and second corner reflectors in a second motion direction along the reflection direction towards the radar.

The device further comprises a controller configured to control the first motor and the second motor for positioning the first and/or the second corner reflector for a plurality of the first distances and/or a plurality of the second distances, and to receive reflection measurement information from the radar for the plurality of the first distances and/or the plurality of the second distances. The controller is further configured to determine the angular resolution of the radar based on the reflection measurement information received from the radar.

Thus, an improved device is provided, allowing determining an angular resolution of a radar with remarkable accuracy in a robust and efficient manner.

In a further possible implementation form, the controller is configured to determine the angular resolution of the radar by determining a phase difference between a first reflected signal from the first corner reflector and a second reflected signal from the second corner reflector for the plurality of first distances and/or the plurality of second distances. Thus, this allows for determination of an angular resolution of a radar in an accurate and robust manner.

In a further possible implementation form, the controller is configured to generate a validation report, wherein the validation report comprises information about the determined angular resolution. Thus, results of the determined angular resolution are made available efficiently.

In a further possible implementation form, the plurality of corner reflectors further comprise a third and a fourth corner reflector for reflecting electromagnetic waves from the radar along the reflection direction towards the radar, wherein the first motor is further configured to change the position of at least one of the third and the fourth corner reflector in a third motion direction perpendicular to the reflection direction towards the radar and perpendicular to the first motion direction and wherein the second motor is further configured to change the position of at least one of the third and the fourth corner reflector in the second motion direction along the reflection direction towards the radar.

In an implementation, the first and second corner reflector are moved horizontally and the third and fourth corner reflector are moved vertically. This hence allows for accurate determination of an angular resolution of a radar in a flexible and versatile manner.

In a further possible implementation form, the plurality of corner reflectors further comprise a third and a fourth corner reflector for reflecting electromagnetic waves from the radar along the reflection direction towards the radar, and the device further comprises a third motor configured to change the position of at least one of the third and the fourth corner reflector in the third motion direction perpendicular to the reflection direction towards the radar and perpendicular to the first motion direction, as well as a fourth motor configured to change the position of at least one of the third and the fourth corner reflector in the second motion direction along the reflection direction towards the radar.

Thus, this allows for accurate determination of an angular resolution of a radar in a flexible, versatile and efficient manner.

In a further possible implementation form, at least some of the plurality of corner reflectors have different sizes. Thus, this enables to measure an angular resolution of a radar for corner reflectors with different radar cross sections in a robust manner.

In a further possible implementation form, the device further comprises an absorption plate having a front surface that is covered with an absorbing material for absorbing the electromagnetic waves from the radar, wherein the plurality of corner reflectors are arranged on a side of the absorption plate with the front surface and the first, second, third and/or fourth motor are arranged on another opposite side of the absorption plate.

Thus, this allows for a measurement setup limiting clutter from the environment and for determination of an angular resolution of a radar in an accurate and robust manner.

In a further possible implementation form, the absorption plate defines one or more slots, wherein each of the plurality corner reflectors is configured to be moved along a respective one of the one or more slots. Thus, positions of the plurality corner reflectors can be adjusted efficiently.

In a further possible implementation form, the device further comprises a movable rack with rollers arranged at a bottom portion of the movable rack, wherein the absorption plate, the plurality of corner reflectors and the first, second, third and/or fourth motor are mounted on the rack.

This thus enables the device to measure an angular resolution of a radar in a continuous and autonomous manner and to determine the angular resolution of the radar efficiently.

In a further possible implementation form, the device further comprises one or more cover plates configured to cover the plurality of corner reflectors in a parking position, wherein the one or more cover plates are made of a material for absorbing the electromagnetic waves from the radar. The parking position represents a position at which a corner reflector is physically covered by a cover plate and thus the corner reflector does not reflect electromagnetic waves back to a radar.

Thus, the device avoids any potential interference from those corner reflectors that are not involved in a measurement and the device can measure an angular resolution of a radar in a robust manner. The device also allows for being placed in the anechoic chamber without disturbing alternative measurements in case all corner reflectors are in a parking position.

In a further possible implementation form, the second motor and/or the fourth motor is configured to change the position of at least one of the plurality of corner reflectors in the second motion direction with a step size smaller than 100 microns along the reflection direction towards the radar, wherein the step size indicates a distance between the position and a consecutive position of the at least one of the plurality of corner reflectors.

Thus, this enables to measure an angular resolution of a radar with extremely high accuracy in a fully reproducible measurement setup.

In a further possible implementation form, the first motor is configured to adjust the position of at least one of the first and the second corner reflector for changing the first distance between the first and the second corner reflector in the first direction perpendicular to the reflection direction towards the radar with a step size of at least 10 millimeters, and/or the first motor and/or the third motor are configured to adjust the position of at least one of the third and the fourth corner reflector for changing a distance between the third and the fourth corner reflector in the third motion direction perpendicular to the reflection direction towards the radar with an accuracy of at least 10 millimeters.

Thus, this enables to measure an angular resolution of a radar with extremely high accuracy in a fully reproducible measurement setup.

In a further possible implementation form, the controller is configured to send a signal to the radar, wherein the signal triggers the radar to transmit electromagnetic waves towards the plurality of corner reflectors and/or the signal further indicates one or more radar parameters, the one or more radar parameters defining a waveform of the electromagnetic waves to be transmitted by the radar towards the plurality of corner reflectors.

Thus, this enables the device to measure an angular resolution of a radar in a continuous and autonomous manner and to determine the angular resolution of the radar efficiently.

According to claim 14, a method for determining an angular resolution of a radar is provided. The method the following steps: controlling, by a controller, a first motor and a second motor for positioning a first and/or a second corner reflector of a plurality of corner reflectors for reflecting electromagnetic waves from the radar along a reflection direction towards the radar; adjusting the position of at least one of the first and the second corner reflector by the first motor for changing a first distance between the first and second corner reflectors in a first motion direction perpendicular to the reflection direction towards the radar; adjusting the position of at least one of the first and the second corner reflector by the second motor for changing a second distance between the first and second corner reflectors in a second motion direction along the reflection direction towards the radar; positioning the first and/or the second corner reflector for a plurality of the first distances and/or a plurality of the second distances, receiving, by the controller, reflection measurement information from the radar for the plurality of the first distances and/or the plurality of the second distances; and

determining, by the controller, the angular resolution of the radar based on the reflection measurement information received from the radar.

Thus, an improved method is provided, allowing determining an angular resolution of a radar with remarkable accuracy in a robust and efficient manner.

The advantages of the method according to claim 14 are the same as those for the corresponding implementation forms of the device according to claim 1.

According to claim 15, a computer program product is provided comprising a computer-readable storage medium for storing program code which causes a controller to perform the above method when the program code is executed by a computer or a processor of the controller.

Therefore, an improved computer program product is provided, allowing determining an angular resolution of a radar with remarkable accuracy in a robust and efficient manner.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments are described in more detail with reference to the attached figures and drawings, in which:

Figure 1 is diagram illustrating a device according to an embodiment for determining an angular resolution of a radar;
Figure 2 is diagram illustrating a further device according to an embodiment for determining an angular resolution of a radar;
Figure 3 shows an exemplary corner reflector of a plurality of corner reflectors according to an embodiment;
Figure 4 is a flow diagram illustrating a procedure of determining an angular resolution of a radar by a device according to an embodiment;
Figure 5 shows an example of a validation report generated by a device according to an embodiment;
Figure 6 is a flow diagram illustrating a method for determining an angular resolution of a radar according to an embodiment.

In the following identical reference signs refer to identical or at least functionally equivalent features.

DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present disclosure may be used. It is understood that embodiments may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless noted otherwise.

The automotive industry requires an extremely intensive validation process during development of a radar system, which may require a considerable amount of resources to provide a clear evaluation of angular resolution of the radar system.

In this respect, embodiments provide a validation setup in an anechoic chamber to evaluate angular resolution performance of a Radar Under Test (RUT) by placing corner reflectors at different angular distances of both dimensions, e.g. azimuth and elevation, wherein both corner reflectors are located at the same range and have the same relative velocity from the RUT. Such validation setup can be fully automatized and configurable to any required angular position.

Additionally, it is required to resolve two objects with different sizes as separated, which is particularly critical in the case where one object is much larger than the other object. Embodiments allow assembling corner reflectors with different sizes to evaluate such critical use case.

Thus, embodiments provide a device with a controller which configures and monitors a mechanical assembly used to validate the angular performance of the Radar Under Test (RUT).

In an embodiment, the mechanical assembly is a chassis on which four motors are installed. In an embodiment, the chassis is made of aluminum or plastic. A chassis made of plastic enables to reduce reflected energy. Each motor adjusts the position of one individual corner reflector whose exact location is determined by the controller. In a further embodiment, two extra motors moving within a very short displacement range with high accuracy are installed to adjust the corner reflectors towards the RUT and to configure a precise phase difference between corner reflectors.

In an embodiment, the mechanical setup of the device is monitored by the controller which comprises a software framework executed in a regular computer and is responsible for the following functions:

1. configuration of the motors: the controller sets every single motor to its proper position, defines its required longitudinal displacement based on the angular distance to validate and coordinates accurately a complete cycle of phase differences between corner reflectors (in terms of setting the right value together with a suitable timing);

2. configuration of the Radar Under Test (RUT): the controller sets proper radar parameters (such as waveform), triggers the radar measurements and collects a detection list generated by the RUT for a every radar cycle time;

3. generation of a validation report: based on the received radar detection list and the different angular distances to be validated, the controller calculates a corresponding probability of detection for each phase difference and generate required figures and graphs to create the validation report.

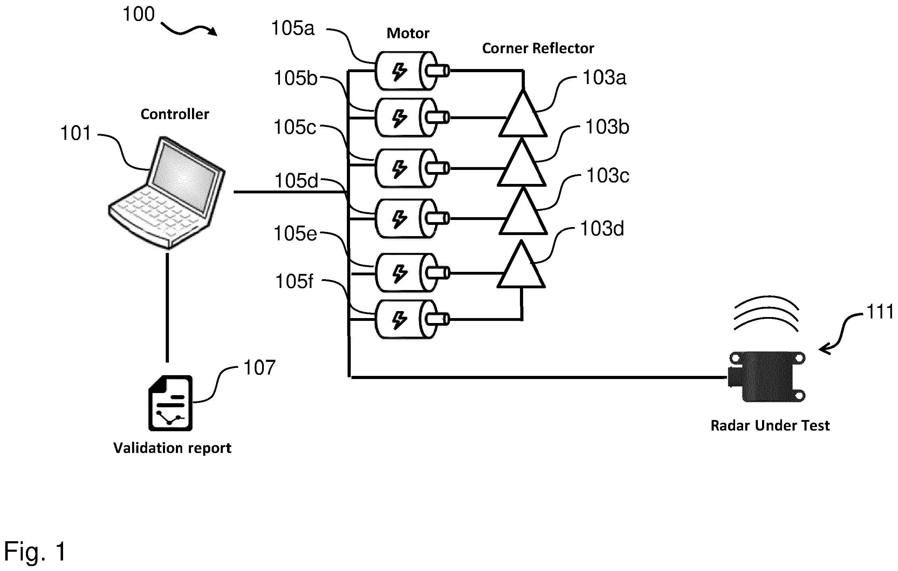

Figure 1 shows a diagram illustrating an exemplary device 100 according to an embodiment which comprises a plurality of corner reflectors 103a-d configured to reflect electromagnetic waves from a radar 111 along a reflection direction towards the radar 111. In an embodiment, the plurality of corner reflectors 103a-d comprise a first 103a, a second 103b, a third 103c and a fourth 103d corner reflector for reflecting electromagnetic waves from the radar 111 along the reflection direction towards the radar 111.

As can be seen in figure 1, the device 100 further comprises a controller 101 configured to determine the angular resolution of the radar 111 based on the reflection measurement information received from the radar 111. In an embodiment, the reflection measurement information comprises a point cloud detection list which is generated by processing the reflected electromagnetic waves from the plurality of corner reflectors 103a-d. Such processing is normally performed by the radar 111 itself. In an embodiment, the controller 101 evaluates the point cloud detection list provided by the radar 111 to determine the angular resolution of the radar 111.

As can be further seen in figure 1, the device 100 also comprises a first motor 105a configured to adjust the position of at least one of the first 103a and second 103b corner reflector for changing a first distance between the first 103a and second 103b corner reflector in a first motion direction perpendicular to the reflection direction towards the radar 111; and a second motor 105b configured to adjust the position of at least one of the first 103a and second 103b corner reflector for changing a second distance between the first 103a and second 103b corner reflector in a second motion direction along the reflection direction towards the radar 111.

In an embodiment, the controller 101 is configured to control the first motor 105a and the second motor 105b for positioning the first 103a and/or the second 103b corner reflector, and to receive reflection measurement information from the radar 111 for a plurality of the first distances and/or a plurality of the second distances. In an embodiment, the controller 101 is configured to determine the angular resolution of the radar 111 by determining a phase difference between a first reflected signal from the first corner reflector 103a and a second reflected signal from the second corner reflector 103b for the plurality of first distances and/or the plurality of second distances.

In an embodiment, the first motor 105a is further configured to change the position of at least one of the third 103c and the fourth 103d corner reflector in a third motion direction perpendicular to the reflection direction towards the radar 111 and perpendicular to the first motion direction, and the second motor 105b is further configured to change the position of at least one of the third 103c and the fourth 103d corner reflector in the second motion direction along the reflection direction towards the radar 111.

Alternatively, the device 100 further comprises a third motor 105c configured to change the position of at least one of the third 103c and the fourth 103d corner reflector in the third motion direction perpendicular to the reflection direction towards the radar 111 and perpendicular to the first motion direction, and a fourth motor 105d configured to change the position of at least one of the third 103c and the fourth corner 103d reflector in the second motion direction along the reflection direction towards the radar 111.

In an embodiment, the first 103a and second 103b corner reflector are configured to move horizontally and the third 103c and fourth 103d corner reflector are configured to move vertically. That is, the first motion direction extends along the horizontal direction of a plane perpendicular to the reflection direction towards the radar 111 and the third motion direction extends along the vertical direction of the plane perpendicular to the reflection direction towards the radar 111.

It is to be noted that, the second motor 105b and/or the fourth motor 105d is configured to change the position of at least one of the plurality of corner reflectors 103a-d in the second motion direction with a step size smaller than 100 microns along the reflection direction towards the radar 111, wherein the step size indicates a distance between the position and a consecutive position of the at least one of the plurality of corner reflectors 103a-d. This hence enables to measure the angular resolution of the radar 111 with extremely high accuracy.

In an embodiment, the first motor 105a is configured to adjust the position of at least one of the first 103a and the second 103b corner reflector for changing the first distance between the first 103a and the second 103b corner reflector in the first direction perpendicular to the reflection direction towards the radar 111 with a step size of at least 10 millimeters.

Likewise, the first motor 105a and/or the third motor 105c are configured to adjust the position of at least one of the third 103c and the fourth 103d corner reflector for changing a distance between the third 103c and the fourth 103d corner reflector in the third motion direction perpendicular to the reflection direction towards the radar 111 with a step size of at least 10 millimeters.

In another embodiment, the device 100 comprises six motors 105a-f in total, wherein two of them 105b,c are configured to move the first 103a and the second 103b corner reflector in the first motion direction, two of them 105d,e are configured to move the third 103c and the fourth 103d corner reflector in the third motion direction, and two of them 105a,f are configured to move at least one of the plurality of corner reflectors 103a-d in the second motion direction.

In an embodiment, the controller 101 is configured to send a signal to the radar 111 to trigger the radar 111 to transmit electromagnetic waves towards the plurality of corner reflectors 103a-d. Further, the signal indicates one or more radar parameters, for example, a waveform of the electromagnetic waves to be transmitted by the radar 111 towards the plurality of corner reflectors 103a-d.

In another embodiment, the one or more radar parameters for radar configuration are provided by a radar supplier, in order to evaluate the radar performance when the radar 111 works at a regular operational mode.

Via the controller 101, it is possible to configure all motors 105a-f to set the plurality of corner reflectors 103a-d at any specific position, providing the device 100 with a great versatility to validate any angular separation power of a radar with tremendous accuracy. Additionally, the controller 101 can define sequential increases of a position along a motion direction for any corner reflector 103a-d, turning out into a fully automated continuous testing.

In an embodiment, it may be required to only input the minimum and maximum angular separation to be evaluated, together with the angular separation step, in order to perform a validation test for a radar 111. With those parameters, the controller 101 can automatically transfer the required positions and timed displacements to the motors 105a-f and shall elaborate a validation report 107 which comprises information about the determined angular resolution of the radar under test.

Angular resolution capability to distinguish two stationary objects located at the same range from a RUT with different sizes (i.e. delta Radar Cross Section; delta RCS) is a key requirement for an automotive imaging radar. Delta RCS is defined as the difference in size between the two laterally adjacent objects that are being detected and is measured in decibel, i.e. dB. A pedestrian standing next to a large object such as a building, a bus, or a truck is a very common use case in urban scenarios.

For that purpose, in an embodiment a validation system with the installation of corner reflectors 103a-d with different sizes is provided, wherein the corner reflectors 103a-d are connected to motors 105a-f with a mechanical adapter that is valid for corner reflectors 103a-d with different sizes. Enabling a setup with a weak object (with a smaller size) close to a dominant object (with a larger size) is a key requirement to evaluate angular resolution performance of a radar 111.

Thus, the embodiments enable a validation setup to measure accurately if a radar under test (RUT) is able to resolve two static targets, e.g. corner reflectors 103a-d, at a given angular distance at the same distance from the RUT.

Direction of Arrival (DoA) estimation for a scenario where only one target is present, is considerably simpler than for a scenario where multiple targets are in the same range Doppler cell. Nevertheless, methods of DoA estimation completely depend on the antenna layout of the RUT and processing must be consistent with positions of the physical elements. The geometry of the antenna array directly influences the resulting phase shift caused by the propagation path of electromagnetic waves. As a matter of fact, DoA estimation is different in a uniform linear array than in a sparse configuration of antennas, to mention a specific example.

The problem to solve is to estimate the direction of arrival $\theta$ of an incident target based on the measured array response. Assuming a plane wave reflected by a target and sampled on the receiver antennas from a uniform linear array, the relative phase shift at the m-th element corresponds to:

$$\phi_m = 2\pi \frac{(m-1)d}{\lambda} \sin(\theta)$$

where d denotes the distance between two antennas and $\lambda$ is the wavelength of signals at corresponding frequency.

When only one target is present, the accuracy depends on: the wavelength, the signal-to-noise ratio (SNR) before DoA (Doppler), number of channels and its position distribution.

Taking $z = \sin(\theta)$ to simplify the formula, the Cramer - Rao Lower Bound gives the following expression for $\sigma_z$:

$$\sigma_{z,1t} = \frac{\lambda}{2\pi\sqrt{2 \cdot N \cdot SNR_{Doppler}} \cdot \sigma_{P_{Vrx}}}$$

If two targets (e.g. reflectors) are present, DoA estimation is affected by:

1. a power difference between targets (mostly defined by the radar cross section);
2. an angular separation between both targets; and/or
3. a phase difference between both targets.

In order to validate the Direction of Arrival (DoA) algorithm and an antenna layout of a radar that separates two targets positioned in the same range with same velocity relative to the radar, the phase difference between the two targets is a crucial parameter. As the resolution capability of a radar depends on the above-mentioned phase difference, embodiments allow validating DoA algorithms for a RUT along different (as many as desired) phase differences as many times as desired, resulting in a robust evaluation and excellent performance overall.

Embodiments realize a device 100 with a controller 101 which defines displacements of motors and positions of reflectors 103a-d, and it is thus possible to configure the phase difference between reflectors 103a-d with very high accuracy and reproducibility, wherein high accuracy refers to the precision of the motor displacements. If a specific position for a reflector 103a-d is required for a defined setup, the motors 105a-f place the reflector 103a-d at the exact position. Reproducibility is the ability of the device 100 to set the reflectors 103a-d at exactly the same positions where they had been already placed previously, in case a specific scenario needs to be repeated.

A phase value from a received signal varies in terms of lambda, which corresponds to 3.9 millimeters in an application for an automotive radar emitting electromagnetic wave at 77 GHz according to an embodiment. That is the reason why so many tiny movement steps in an order of 10 $\mu$m with a challenging accuracy (<1$\mu$m) are required. This setup usually cannot be achieved by a person moving manually the reflectors 103a-d.

Assessing any angular performance based exclusively on one single physical setup between targets would lead to wrong conclusions. In contrast, embodiments enable a device 100 with a unique architecture to properly evaluate the angular performance of a radar 111. In particular, the embodiments allow for an assembly of two reflectors 103a-d with different sizes (e.g. with different radar cross sections) to validate if a radar 111 can separate the two reflectors 103a-d with different sizes. This scenario is a crucial capability concerning angular detection performance.

The embodiments can also be used as a standard in the industry to evaluate the performance of a mmWave radar, because it simplifies considerably the validation process of a radar 111 in terms of its angular resolution. It can be adapted to a laboratory environment, which saves a remarkable amount of resources and even improves safety of the validation process.

Besides, the embodiments could potentially support industry relevant entities to elaborate a benchmark based on the performance evaluated with the device 100 of the embodiments. Applying the embodiments within a mmWave scope, car makers could validate several Tier 1 systems to obtain a clear comparison among all radars. This information is extremely relevant during a project award phase.

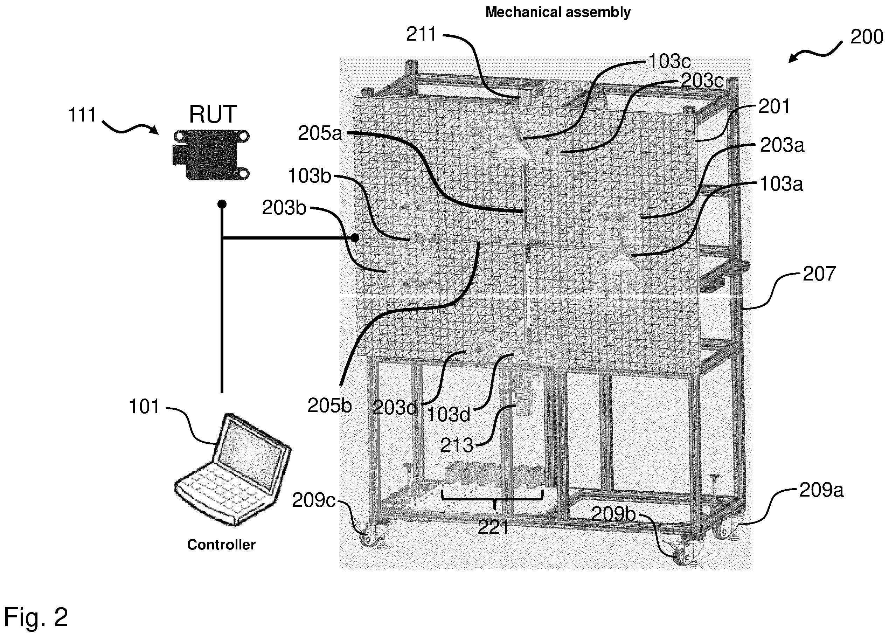

In a further embodiment, figure 2 shows a diagram illustrating an exemplary device 100 which comprises a controller 101 and a plurality of corner reflectors 103a-d configured to reflect electromagnetic waves from a radar 111 along a reflection direction towards the radar 111. The plurality of corner reflectors 103a-d comprises a first 103a, a second 103b, a third 103c and a fourth 103d corner reflector.

The device 100 further comprises two or more motors 211,213 (not all shown in figure 2), wherein at least one motor 211,213 is configured to move the first 103a and the second 103b corner reflector in a first motion direction perpendicular to the reflection direction towards the radar 111, at least one motor 211,213 is configured to move at least one of the plurality of corner reflectors 103a-d in a second motion direction along the reflection direction towards the radar 111, and at least one motor is configured to move the third 103c and the fourth 103d corner reflector in a third motion direction perpendicular to the reflection direction towards the radar 111. The first motion direction extends along the horizontal direction of a plane perpendicular to the reflection direction towards the radar 111 and the third motion direction extends along the vertical direction of the plane perpendicular to the reflection direction towards the radar 111.

As can be seen from figure 2, the device 100 further comprises an absorption plate 201 having a front surface that is covered with an absorbing material for absorbing the electromagnetic waves from the radar 111, wherein the plurality of corner reflectors 103a-d are arranged on a side of the absorption plate 201 with the front surface and the two or more motors 211,213 are arranged on another opposite side of the absorption plate 201.

In an embodiment, the absorption plate defines one or more slots 205a,b and each of the plurality corner reflectors 103a-d is configured to be moved along a respective one of the one or more slots 205a,b.

In an embodiment, the device 100 further comprises a movable rack (also referred to as chassis) 207 with rollers 209a-c arranged at a bottom portion of the movable rack 207, wherein the absorption plate 201, the plurality of corner reflectors 103a-d and the two or more motors 211,213 are mounted on the rack 207. In an embodiment, the device 100 further comprises a plurality of motor controllers 221 to control the two or more motors 211,213. In an embodiment, the movable rack 207 may have a height of about 194 centimeters, a width of about 144 centimeters and a depth of about 88 centimeters.

In an embodiment, the device 100 further comprises one or more cover plates 203a-d configured to cover the plurality of corner reflectors 103a-d in a parking position, wherein the one or more cover plates 203a-d are made of a material for absorbing the electromagnetic waves from the radar 111.

The parking position is a position where a corner reflector 103a-d is physically covered by an cover plate 203a-d and therefore it cannot reflect back to the radar its transmitted signal and reduces tremendously the reflection back to the radar from its transmitted signal, which can be considered negligible. In an embodiment, the radar 111 receives reflected signals from all corner reflectors 103a-d if there is free line of sight, that is, if reflectors are all visible, as multipath trajectories have been carefully suppressed in the anechoic chamber environment. If none of the reflectors 103a-d are in the parking position, the radar 111 detects all of the four reflectors 103a-d.

In an embodiment, in order to validate the angular resolution of the radar in a robust way and to avoid any potential coupling between both dimensions (e.g. azimuth and elevation) during the estimation of the direction of arrival from a reflector 103a-d, it is recommended to use simultaneously only two corner reflectors 103a-d which move along either the azimuth or the elevation dimension, wherein the other two corner reflectors 103a-d may be placed in a parking position.

In an embodiment, the device 100 as shown in figure 2 may be applied to determine an angular resolution of an automotive radar which transmits electromagnetic waves at 76 to 81 GHz. Each of the plurality of corner reflectors 103a-d is only moved in one single direction (either azimuth or elevation). The dynamic range of displacements between the plurality of corner reflectors 103a-d is monitored by the controller 101. In an embodiment, the plurality of corner reflectors 103a-d are moved longitudinally (either horizontally or vertically) up to 400 millimeters with a movement of 10 millimeters each time.

No corner reflectors can physically reach or exceed the cross center point to prevent collision between corner reflectors. At the bottom of the rack 207, the plurality of motor controllers 221 are installed and configured to be wired to the motors 211,213 and the plurality of motor controllers 221 send control signals to the motors 211,213 which adjust positions of the plurality of corner reflectors 103a-d accordingly.

Meanwhile, phase motors can move the corner reflectors 103a-d with a much shorter span but with considerably greater resolution. In an embodiment, the phase motors triggered by the controller 101 can move the corner reflectors 103a-d up to a span of 30 millimeters with a movement up to 100 $\mu$m each time. This order of resolution is required because the phase is extremely sensitive, as it depends on lambda.

As can be seen from figure 2, each of the plurality of corner reflectors 103a-d is at a parking position and is covered by a plexiglass plate 203a-d attached to the absorption plate 201 with four rods. For the sake of clarity, the cover plates 203a-d are shown transparent in figure 2, but they shall be covered by an absorbing material to ensure that the corner reflectors 103a-d do not interfere in any measurement in the anechoic chamber when they are placed in the parking position. In an embodiment, the dimension of the cover plates 203a-d can be adapted to potentially cover the largest corner reflector 103a-d.

Regarding the physical dimension of the plurality of corner reflectors 103a-d, it depends, for example, on the operation frequency band and the desired validation dynamic range (e.g. a set of angles to be tested)..

In an embodiment, the plurality of corner reflectors 103a-d are configured to reflect the electromagnetic waves in a frequency range from about 60 to about 90 GHz from the radar along the reflection direction towards the radar.

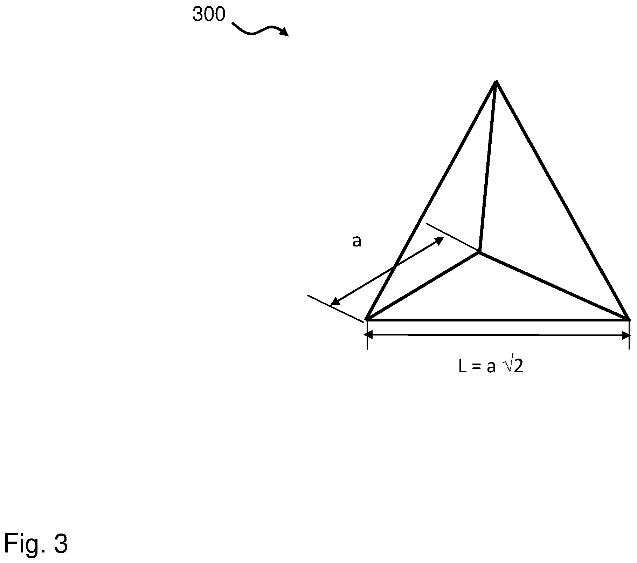

Figure 3 shows an exemplary corner reflector 300 of a plurality of corner reflectors 103a-d according to an embodiment, wherein the corner reflector 300 is a trihedral corner reflector 300 with a side length "a". In an embodiment, the plurality of corner reflectors 103a-d of a device 100 have the same side length or different side lengths from one other, wherein one or more of the plurality of corner reflectors 103a-d are a corner reflector with a radar cross section in a range from 5 dBsm to 20 dBsm or with L in a range from about 80 millimeters to about 250 millimeters, L corresponding to the side length times $\sqrt{2}$ .

In an embodiment, the corner reflectors 103a-d are placed at a distance (referred as "D") of 9.2 meters from the radar under test (RUT).

In an embodiment, at least some of the plurality of corner reflectors 103a-d have different sizes, for example, the plurality of corner reflectors 103a-d used at recreated scenarios are a 5dBsm corner reflector at 77GHz with L = 83 millimeters; a 10dBsm corner reflector at 77GHz with L = 110 millimeters; a 15dBsm corner reflector at 77GHz with L = 146 millimeters, and a 20dBsm corner reflector at 77GHz with L = 195 millimeters.

As the closest positions at which two trihedral corner reflectors 103a-d can be is edge corner to edge corner, the minimum distance between their phase centers is L. Minimum angular resolution for such setup is arcsin ( L / D ) = arcsin ( 82.3 millimeters / 9200 millimeters) = 0.51°, wherein "L" denotes a minimum distance between their phase centers of two corner reflectors 103a-d and "D" denotes a distance between the radar and the corner reflectors 103a-d.

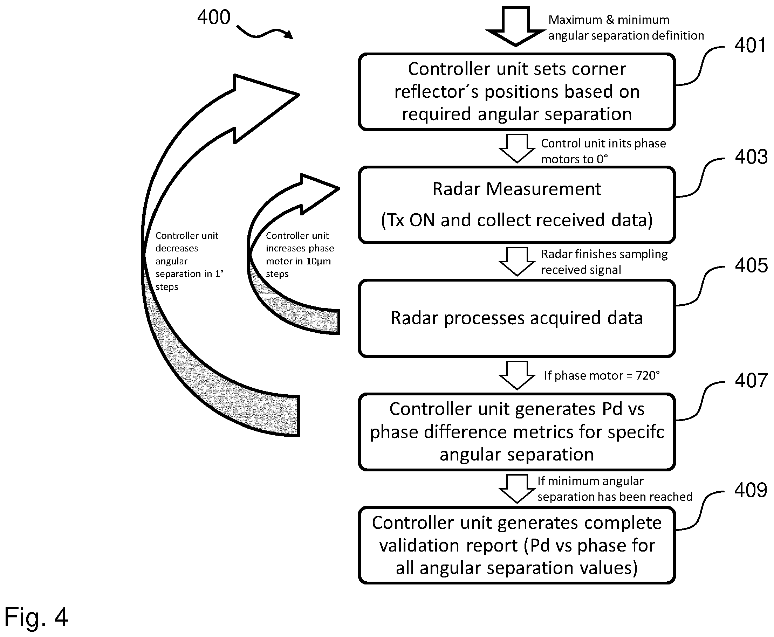

Figure 4 is a flow diagram illustrating a procedure 400 of determining an angular resolution of a radar under test (RUT) by a device 100 according to an embodiment, wherein a controller 101 of the device 100 is configured to evaluate the angular resolution performance of the RUT by setting different phase difference values between two corner reflectors 103a-d of the device 100 with an outstanding accuracy (in an order of 1 $\mu$m as described before).

In particular, figure 4 shows a validation procedure of evaluating the angular resolution performance of the RUT, wherein input parameters are the maximum and minimum angular resolution position (between 4° and 1° specifically) and a measurement step (e.g. 1°). It is noted the values of 4° and 1° are examples.

In an embodiment, the controller 101 of the device 100 determines initial positions of the corner reflectors 103a-d by placing the corner reflectors 103a-d via motors of the device 100 at their suitable positions (corresponding to a 4° angular distance) at which both corner reflectors 103a-d are at exactly the same distance towards the RUT (0° phase difference). In a stationary scenario, the controller 101 triggers the radar to start measurements.

Once the radar has processed reflected signals from the corner reflectors and/or a corresponding detection list for a given cycle, the controller moves the motors towards the radar to set the next phase difference value accordingly. When the phase motor has been moved at least a displacement towards the radar corresponding to 720° in phase (which means that every single position between reflectors has been evaluated twice), the controller 101 computes every cycle reflected signals from the corner reflectors and/or a detection list and generates a metric of "probability of detection per every phase difference".

Once the metric has been elaborated, that specific angular position is evaluated and the controller 101 sets up the successive angular separation between the corner reflectors 103a-d, initializing the phase difference between the corner reflectors to 0°. The complete process as described above is repeated until a new metric for that angular position is generated. This loop ends when the minimum distance to be validated is reached, and the number of loop iterations depends on the defined angular measurement step.

When the controller 101 has collected all cycle reflected signals from the corner reflectors 103a-d and/or detection lists and generated the corresponding metric up to the minimum angular separation, it generates a complete validation report which comprises all probabilities of detection per phase difference value over all angular positions. When such report is available, it is highly accurate to evaluate the angular resolution performance of the radar, as it has been characterized over a complete span of positions between the corner reflectors 103a-d.

The procedure 400 comprises the following steps: first, the controller 101 adjusts positions of the corner reflectors 103a-d based on a required angular separation (block 401 of figure 4). Next, the controller 101 triggers the radar to start the measurement by transmitting electromagnetic waves towards the corner reflectors 103a-d (block 403 of figure 4) and the radar receives reflected electromagnetic waves and processes the received data from the corner reflectors (block 405 of figure 4). After the radar sends the processed measurement information to the controller 101, the controller 101 is configured to determine probabilities of detecting the corner reflectors 103a-d separately as a function of the phase difference for a specific angular separation between the corner reflectors 103a-d (block 407 of figure 4). Finally, the controller 101 generates a validation report comprising probabilities of detections as a function of the phase difference for all possible angular separation values between the corner reflectors 103a-d (block 409 of figure 4).

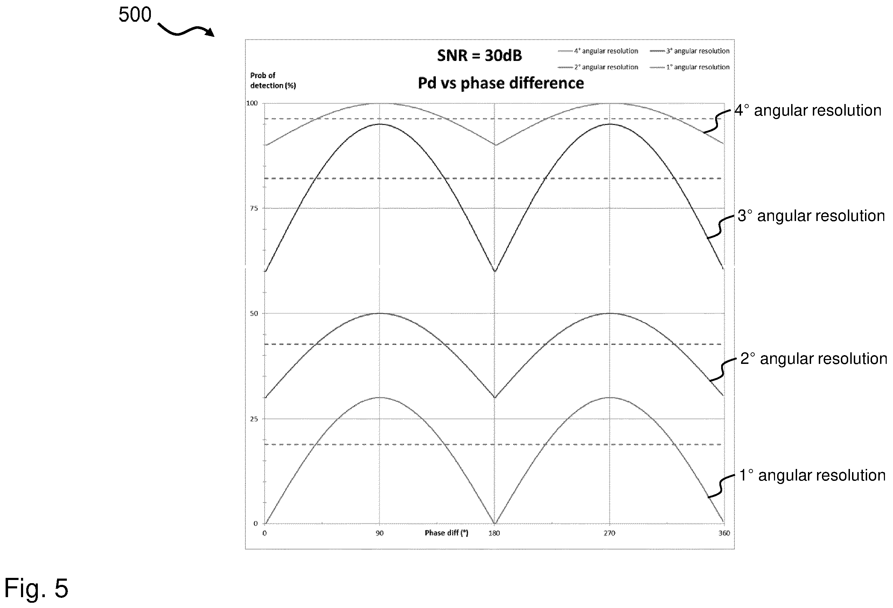

Figure 5 shows an example of a validation report 500 generated by the device according to an embodiment, wherein the device 100 has performed the complete validation process as described above. The validation report 500 comprises information about the determined angular resolution of the radar, in particular, about probabilities of detecting the plurality of corner reflectors 103a-d separately as a function of the phase difference.

As can be seen from figure 5, solid lines show probabilities of detection of two corner reflectors 103a-d as separated as a function of the phase difference between them at a given angular separation (4°, 3°, 2°, 1° respectively). On the other hand, dashed lines as shown in figure 5 illustrate an average probability of detection measured via a simple but incomplete performance evaluation.

All plotted values are configurable, providing a great flexibility together with robustness to validate any required angular separation. In view of the above, embodiments can be potentially adapted to be an industry standard based on the unique validation quality.

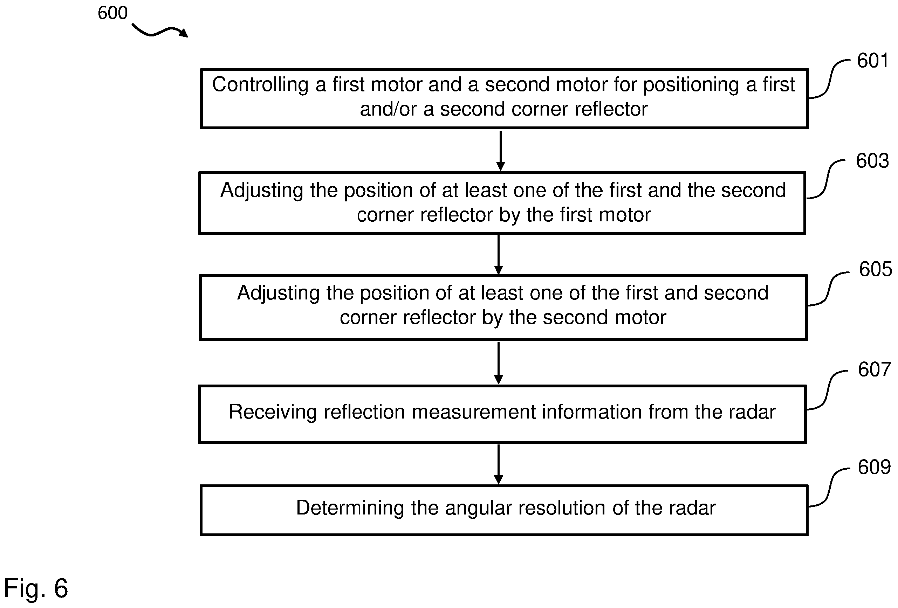

Figure 6 is a flow diagram illustrating a method 600 for determining an angular resolution of a radar according to an embodiment. The method 600 comprises the following steps: controlling 601 a first motor and a second motor for positioning a first and/or a second corner reflector of a plurality of corner reflectors for reflecting electromagnetic waves from the radar along a reflection direction towards the radar; adjusting 603 the position of at least one of the first and the second corner reflector by the first motor for changing a first distance between the first and second corner reflector in a first motion direction perpendicular to the reflection direction towards the radar; adjusting 605 the position of at least one of the first and second corner reflector by the second motor for changing a second distance between the first and second corner reflector in a second motion direction along the reflection direction towards the radar; receiving 607 reflection measurement information from the radar for a plurality of the first distances and/or a plurality of the second distances; and determining 609 the angular resolution of the radar based on the reflection measurement information received from the radar.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments may be integrated into one processing unit, or each of the units may exist alone physically, or two or more units are integrated into one unit.

**Claims**

1. A device (100) for determining an angular resolution of a radar (111), comprising:

a plurality of corner reflectors (103a-d), comprising a first (103a) and a second (103b) corner reflector configured to reflect electromagnetic waves from the radar (111) along a reflection direction towards the radar (111);
a first motor (105a) configured to adjust the position of at least one of the first (103a) and the second (103b) corner reflector for changing a first distance between the first (103a) and second (103b) corner reflectors in a first motion direction perpendicular to the reflection direction towards the radar (111);
a second motor (105b) configured to adjust the position of at least one of the first (103a) and the second (103b) corner reflector for changing a second distance between the first (103a) and second (103b) corner reflectors in a second motion direction along the reflection direction towards the radar (111); and

a controller (101) configured to control the first motor (105a) and the second motor (105b) for positioning the first (103a) and/or the second (103b) corner reflector for a plurality of the first distances and/or a plurality of the second distances,

**characterized in that** the controller is further configured to receive reflection measurement information from the radar (111) for the plurality of the first distances and/or the plurality of the second distances, and **in that** the controller (101) is further configured to determine the angular resolution of the radar (111) based on the reflection measurement information received from the radar (111).

2. The device (100) according to claim 1, wherein the controller (101) is configured to determine the angular resolution of the radar (111) by determining a phase difference between a first reflected signal from the first corner reflector (103a) and a second reflected signal from the second corner reflector (103b) for the plurality of first distances and/or the plurality of second distances.

3. The device (100) according to claim 1 or 2, wherein the controller (101) is configured to generate a validation report (107), wherein the validation report (107) comprises information about the determined angular resolution.

4. The device (100) according to any one of the preceding claims, wherein the plurality of corner reflectors (103a-d) further comprise a third (103c) and a fourth (103d) corner reflector for reflecting electromagnetic waves from the radar (111) along the reflection direction towards the radar (111),

wherein the first motor (105a) is further configured to change the position of at least one of the third (103c) and the fourth (103d) corner reflector in a third motion direction perpendicular to the reflection direction towards the radar (111) and perpendicular to the first motion direction, and

wherein the second motor (105b) is further configured to change the position of at least one of the third (103c) and the fourth (103d) corner reflector in the second motion direction along the reflection direction towards the radar (111).

5. The device (100) according to any one of claims 1 to 3, wherein the plurality of corner reflectors (103a-d) further comprise a third (103c) and a fourth (103d) corner reflector for reflecting electromagnetic waves from the radar (111) along the reflection direction towards the radar (111), and wherein the device (101) further comprises a third motor (105c) configured to change the position of at least one of the third (103c) and the fourth (103d) corner reflector in the third motion direction perpendicular to the reflection direction towards the radar (111) and perpendicular to the first motion direction, and a fourth motor (105d) configured to change the position of at least one of the third (103c) and the fourth (103d) corner reflector in the second motion direction along the reflection direction towards the radar (111).

6. The device (100) according to any one of the preceding claims, wherein at least some of the plurality of corner reflectors (103a-d) have different sizes.

7. The device (100) of claim 5, further comprising an absorption plate (201) having a front surface that is covered with an absorbing material for absorbing the electromagnetic waves from the radar (111), wherein the plurality of corner reflectors (103a-d) are arranged on a side of the absorption plate (201) with the front surface and the first, second, third and/or fourth motor (105a-d) are arranged on another opposite side of the absorption plate (201).

8. The device (100) of claim 7, wherein the absorption plate (201) defines one or more slots (205a,b), wherein each of the plurality corner reflectors (103a-d) is configured to be moved along a respective one of the one or more slots (205a,b).

9. The device (100) of claim 7 or 8, further comprising a movable rack (207) with rollers (209a-c) arranged at a bottom portion of the movable rack (207), wherein the absorption plate (201), the plurality of corner reflectors (103a-d) and the first, second, third and/or fourth motor (105a-d) are mounted on the movable rack (207).

10. The device (100) according to any one of the preceding claims 4 to 9, further comprising one or more cover plates (203a-d) configured to cover the plurality of corner reflectors (103a-d) in a parking position, wherein the one or more cover plates (203a-d) are made of a material for absorbing the electromagnetic waves from the radar (111).

11. The device (100) according to any one of claims 5 and 7-9, wherein the second motor (105b) and/or the fourth motor (105d) is configured to change the position of at least one of the plurality of corner reflectors (103a-d) in the second motion direction with a step size smaller than 100 microns along the reflection direction towards the radar (111).

12. The device (100) according to any one of the claims 5, 7-9, and 11, wherein the first motor (105a) is configured to adjust the position of at least one of the first (103a) and the second (103b) corner reflector for changing the first distance between the first (103a) and the second (103b) corner reflector in the first direction perpendicular to the reflection direction towards the radar (111) with a step size of at least 10 millimeters, and/or wherein the first motor (105a) and/or the third motor (105c) are configured to adjust the position of at least one of the third (103c) and the fourth (103d) corner reflector for changing a distance between the third (103c) and the fourth (103d) corner reflector in the third motion direction perpendicular to the reflection direction towards the radar (111) with a step size of at least 10 millimeters.

13. The device (100) according to any one of the preceding claims, wherein the controller (101) is configured to send a signal to the radar (111), wherein the signal triggers the radar (111) to transmit electromagnetic waves towards the plurality of corner reflectors (103a-d) and/or wherein the signal further indicates one or more radar parameters, the one or more radar parameters defining a waveform of the electromagnetic waves to be transmitted by the radar (111) towards the plurality of corner reflectors (103a-d).

14. A method (600) for determining an angular resolution of a radar (111), comprising:

controlling (601), by a controller (101), a first motor (105a) and a second motor (105b) for positioning a first (103a) and/or a second (103b) corner reflector of a plurality of corner reflectors (103a-d) for reflecting electromagnetic waves from the radar (111) along a reflection direction towards the radar (111);
adjusting (603) the position of at least one of the first (103a) and the second (103b) corner reflector by the first motor (105a) for changing a first distance between the first (103a) and second (103b) corner reflectors in a first motion direction perpendicular to the reflection direction towards the radar (111); and
adjusting (605) the position of at least one of the first (103a) and the second (103b) corner reflector by the second motor (105b) for changing a second distance between the first (103a) and second (103b) corner reflectors in a second motion direction along the reflection direction towards the radar (111);
positioning the first (103a) and/or the second (103b) corner reflector for a plurality of the first distances and/ or a plurality of the second distances; **characterized in that** the method further comprises:

receiving (607), by the controller (101), reflection measurement information from the radar (111) for the plurality of the first distances and/or the plurality of the second distances; and
determining (609), by the controller (101), the angular resolution of the radar (111) based on the reflection measurement information received from the radar (111).

15. A computer program product comprising a computer-readable storage medium for storing program code which causes the controller to perform the method (600) of claim 14 when the program code is executed by a computer or a processor of the controller.


**Patentansprüche**

1. Vorrichtung (100) zum Bestimmen einer Winkelauflösung eines Radars (111), umfassend:

eine Vielzahl von Eckreflektoren (103a-d), die einen ersten (103a) und einen zweiten (103b) Eckreflektor umfasst, die dazu konfiguriert sind, elektromagnetische Wellen von dem Radar (111) entlang einer Reflexionsrichtung hin zu dem Radar (111) zu reflektieren;
einen ersten Motor (105a), der dazu konfiguriert ist, die Position von mindestens einem des ersten (103a) und des zweiten (103b) Eckreflektors einzustellen, um einen ersten Abstand zwischen dem ersten (103a) und dem zweiten (103b) Eckreflektor in einer ersten Bewegungsrichtung senkrecht zu der Reflexionsrichtung hin zu dem Radar (111) zu ändern;
einen zweiten Motor (105b), der dazu konfiguriert ist, die Position von mindestens einem des ersten (103a) und des zweiten (103b) Eckreflektors einzustellen, um einen zweiten Abstand zwischen dem ersten (103a) und dem zweiten (103b) Eckreflektor in einer zweiten Bewegungsrichtung entlang der Reflexionsrichtung hin zu dem Radar (111) zu ändern; und
eine Steuerung (101), die dazu konfiguriert ist, den ersten Motor (105a) und den zweiten Motor (105b) zu steuern, um den ersten (103a) und/oder den zweiten (103b) Eckreflektor für eine Vielzahl von den ersten Abständen und/oder eine Vielzahl von den zweiten Abständen zu positionieren, **dadurch gekennzeichnet, dass** die Steuerung ferner dazu konfiguriert ist, Reflexionsmessinformationen von dem Radar (111) für die Vielzahl von den ersten Abständen und/oder die Vielzahl von den zweiten Abständen zu empfangen, und darin, dass die Steuerung (101) ferner dazu konfiguriert ist, die Winkelauflösung des Radars (111) basierend auf den Reflexionsmessinformationen, die von dem Radar (111) empfangen werden, zu bestimmen.

2. Vorrichtung (100) nach Anspruch 1, wobei die Steuerung (101) dazu konfiguriert ist, die Winkelauflösung des Radars (111) durch Bestimmen einer Phasendifferenz zwischen einem ersten reflektierten Signal von dem ersten Eckreflektor (103a) und einem zweiten reflektierten Signal von dem zweiten Eckreflektor (103b) für die Vielzahl von ersten Abständen und/oder die Vielzahl von zweiten Abständen zu bestimmen.

3. Vorrichtung (100) nach Anspruch 1 oder 2, wobei die Steuerung (101) dazu konfiguriert ist, einen Validierungsbericht (107) zu erzeugen, wobei der Validierungsbericht (107) Informationen über die bestimmte Winkelauflösung umfasst.

4. Vorrichtung (100) nach einem der vorhergehenden Ansprüche, wobei die Vielzahl von Eckreflektoren (103a-d) ferner einen dritten (103c) und einen vierten (103d) Eckreflektor zum Reflektieren elektromagnetischer Wellen von dem Radar (111) entlang der Reflexionsrichtung hin zu dem Radar (111) umfasst,

wobei der erste Motor (105a) ferner dazu konfiguriert ist, die Position von mindestens einem des dritten (103c) und des vierten (103d) Eckreflektors in einer dritten Bewegungsrichtung senkrecht zu der Reflexionsrichtung hin zu dem Radar (111) und senkrecht zu der ersten Bewegungsrichtung zu ändern, und
wobei der zweite Motor (105b) ferner dazu konfiguriert ist, die Position von mindestens einem des dritten (103c) und des vierten (103d) Eckreflektors in der zweiten Bewegungsrichtung entlang der Reflexionsrichtung hin zu dem Radar (111) zu ändern.

5. Vorrichtung (100) nach einem der Ansprüche 1 bis 3, wobei die Vielzahl von Eckreflektoren (103a-d) ferner einen dritten (103c) und einen vierten (103d) Eckreflektor zum Reflektieren elektromagnetischer Wellen von dem Radar (111) entlang der Reflexionsrichtung hin zu dem Radar (111) umfasst und wobei die Vorrichtung (101) ferner einen dritten Motor (105c), der dazu konfiguriert ist, die Position von mindestens einem des dritten (103c) und des vierten (103d) Eckreflektors in der dritten Bewegungsrichtung senkrecht zu der Reflexionsrichtung hin zu dem Radar (111) und senkrecht zu der ersten Bewegungsrichtung zu ändern, und einen vierten Motor (105d), der dazu konfiguriert ist, die Position von mindestens einem des dritten (103c) und des vierten (103d) Eckreflektors in der zweiten Bewegungsrichtung entlang der Reflexionsrichtung hin zu dem Radar (111) zu ändern, umfasst.

6. Vorrichtung (100) nach einem der vorhergehenden Ansprüche, wobei zumindest einige der Vielzahl von Eckreflektoren (103a-d) unterschiedliche Größen aufweisen.

7. Vorrichtung (100) nach Anspruch 5, ferner umfassend eine Absorptionsplatte (201), die eine Vorderseite aufweist, die mit einem absorbierenden Material bedeckt ist, um die elektromagnetischen Wellen von dem Radar (111) zu absorbieren, wobei die Vielzahl von Eckreflektoren (103a-d) auf einer Seite der Absorptionsplatte (201) mit der Vorderseite angeordnet ist und der erste, zweite, dritte und/oder vierte Motor (105a-d) auf einer anderen, gegenüberliegenden Seite der Absorptionsplatte (201) angeordnet ist.

8. Vorrichtung (100) nach Anspruch 7, wobei die Absorptionsplatte (201) einen oder mehrere Schlitze (205a,b) definiert, wobei jeder der Vielzahl von Eckreflektoren (103a-d) dazu konfiguriert ist, entlang eines jeweiligen des einen oder der mehreren Schlitze (205a,b) bewegt zu werden.

9. Vorrichtung (100) nach Anspruch 7 oder 8, ferner umfassend ein bewegliches Gestell (207) mit Rollen (209a-c), die an einem unteren Abschnitt des beweglichen Gestells (207) angeordnet sind, wobei die Absorptionsplatte (201), die Vielzahl von Eckreflektoren (103a-d) und der erste, zweite, dritte und/oder vierte Motor (105a-d) auf dem beweglichen Gestell (207) montiert sind.

10. Vorrichtung (100) nach einem der vorhergehenden Ansprüche 4 bis 9, ferner umfassend eine oder mehrere Abdeckplatten (203a-d), die dazu konfiguriert sind, die Vielzahl von Eckreflektoren (103a-d) in einer Parkposition abzudecken, wobei die eine oder die mehreren Abdeckplatten (203a-d) aus einem Material zum Absorbieren der elektromagnetischen Wellen von dem Radar (111) hergestellt sind.

11. Vorrichtung (100) nach einem der Ansprüche 5 und 7-9, wobei der zweite Motor (105b) und/oder der vierte Motor (105d) dazu konfiguriert ist, die Position von mindestens einem der Vielzahl von Eckreflektoren (103a-d) in der zweiten Bewegungsrichtung mit einer Schrittweite von weniger als 100 Mikrometern entlang der Reflexionsrichtung hin zu dem Radar (111) zu ändern.

12. Vorrichtung (100) nach einem der Ansprüche 5, 7-9 und 11, wobei der erste Motor (105a) dazu konfiguriert ist, die Position von mindestens einem des ersten (103a) und des zweiten (103b) Eckreflektors einzustellen, um den ersten Abstand zwischen dem ersten (103a) und dem zweiten (103b) Eckreflektor in der ersten Richtung senkrecht zu der Reflexionsrichtung hin zu dem Radar (111) mit einer Schrittweite von mindestens 10 Millimetern zu ändern, und/oder wobei der erste Motor (105a) und/oder der dritte Motor (105c) dazu konfiguriert ist, die Position von mindestens einem des dritten (103c) und des vierten (103d) Eckreflektors einzustellen, um einen Abstand zwischen dem dritten (103c) und dem vierten (103d) Eckreflektor in der dritten Bewegungsrichtung senkrecht zu der Reflexionsrichtung hin zu dem Radar (111) mit einer Schrittweite von mindestens 10 Millimetern zu ändern.

13. Vorrichtung (100) nach einem der vorhergehenden Ansprüche, wobei die Steuerung (101) dazu konfiguriert ist, ein Signal an das Radar (111) zu senden, wobei das Signal das Radar (111) dazu bringt, elektromagnetische Wellen hin zu der Vielzahl von Eckreflektoren (103a-d) zu übertragen, und/oder wobei das Signal ferner einen oder mehrere Radarparameter angibt, wobei der eine oder die mehreren Radarparameter eine Wellenform der elektromagnetischen Wellen definieren, die durch das Radar (111) hin zu der Vielzahl von Eckreflektoren (103a-d) zu übertragen sind.

14. Verfahren (600) zum Bestimmen einer Winkelauflösung eines Radars (111), umfassend:

Steuern (601), durch eine Steuerung (101), eines ersten Motors (105a) und eines zweiten Motors (105b), um einen ersten (103a) und/oder einen zweiten (103b) Eckreflektor einer Vielzahl von Eckreflektoren (103a-d) zum Reflektieren elektromagnetischer Wellen von dem Radar (111) entlang einer Reflexionsrichtung hin zu dem Radar (111) zu positionieren;

Einstellen (603) der Position von mindestens einem des ersten (103a) und des zweiten (103b) Eckreflektors durch den ersten Motor (105a), um einen ersten Abstand zwischen dem ersten (103a) und dem zweiten (103b) Eckreflektor in einer ersten Bewegungsrichtung senkrecht zu der Reflexionsrichtung hin zu dem Radar (111) zu ändern; und

Einstellen (605) der Position von mindestens einem des ersten (103a) und des zweiten (103b) Eckreflektors durch den zweiten Motor (105b), um einen zweiten Abstand zwischen dem ersten (103a) und dem zweiten (103b) Eckreflektor in einer zweiten Bewegungsrichtung entlang der Reflexionsrichtung hin zu dem Radar (111) zu ändern;

Positionieren des ersten (103a) und/oder des zweiten (103b) Eckreflektors für eine Vielzahl von den ersten Abständen und/oder eine Vielzahl von den zweiten Abständen; **dadurch gekennzeichnet, dass** das Verfahren ferner Folgendes umfasst:

Empfangen (607), durch die Steuerung (101), von Reflexionsmessinformationen von dem Radar (111) für die Vielzahl von den ersten Abständen und/oder die Vielzahl von den zweiten Abständen; und

Bestimmen (609), durch die Steuerung (101), der Winkelauflösung des Radars (111) basierend auf den Reflexionsmessinformationen, die von dem Radar (111) empfangen werden.

15. Computerprogrammprodukt, umfassend ein computerlesbares Speichermedium zum Speichern eines Programmcodes, der die Steuerung dazu veranlasst, das Verfahren (600) nach Anspruch 14 durchzuführen, wenn der Programmcode durch einen Computer oder einen Prozessor der Steuerung ausgeführt wird.

**Revendications**

1. Dispositif (100) de détermination d'une résolution angulaire d'un radar (111), comprenant :

une pluralité de réflecteurs d'angle (103a-d), comprenant un premier (103a) et un deuxième (103b) réflecteur d'angle configurés pour réfléchir des ondes électromagnétiques du radar (111) le long d'une direction de réflexion vers le radar (111) ;

un premier moteur (105a) configuré pour ajuster la position d'au moins l'un du premier (103a) et du deuxième (103b) réflecteur d'angle pour modifier une première distance entre les premier (103a) et deuxième (103b) réflecteurs d'angle dans une première direction de mouvement perpendiculaire à la direction de réflexion vers le radar (111) ;

un deuxième moteur (105b) configuré pour ajuster la position d'au moins l'un du premier (103a) et du deuxième (103b) réflecteur d'angle pour modifier une seconde distance entre les premier (103a) et deuxième (103b) réflecteurs d'angle dans une deuxième direction de mouvement perpendiculaire à la direction de réflexion vers le radar (111) ; et

un dispositif de commande (101) configuré pour commander le premier moteur (105a) et le deuxième moteur (105b) pour positionner le premier (103a) et/ou le deuxième (103b) réflecteur d'angle pour une pluralité des premières distances et/ou une pluralité des secondes distances, **caractérisé en ce que** le dispositif de commande est également configuré pour recevoir des informations de mesure de réflexion du radar (111) pour la pluralité des premières distances et/ou la pluralité des secondes distances, et **en ce que** le dispositif de commande (101) est également configuré pour déterminer la résolution angulaire du radar (111) sur la base des informations de mesure de réflexion reçues du radar (111).

2. Dispositif (100) selon la revendication 1, dans lequel le dispositif de commande (101) est configuré pour déterminer la résolution angulaire du radar (111) en déterminant une différence de phase entre un premier signal réfléchi provenant du premier réflecteur d'angle (103a) et un second signal réfléchi provenant du deuxième réflecteur d'angle (103b) pour la pluralité de premières distances et/ou la pluralité de secondes distances.

3. Dispositif (100) selon la revendication 1 ou 2, dans lequel le dispositif de commande (101) est configuré pour générer un rapport de validation (107), dans lequel le rapport de validation (107) comprend des informations sur la résolution angulaire déterminée.

4. Dispositif (100) selon l'une quelconque des revendications précédentes, dans lequel la pluralité de réflecteurs d'angle (103a-d) comprend également un troisième (103c) et un quatrième (103d) réflecteurs d'angle pour réfléchir les ondes électromagnétiques du radar (111) le long de la direction de réflexion vers le radar (111),

dans lequel le premier moteur (105a) est également configuré pour modifier la position d'au moins l'un des troisième (103c) et quatrième (103d) réflecteurs d'angle dans une troisième direction de mouvement perpendiculaire à la direction de réflexion vers le radar (111) et perpendiculaire à la première direction de mouvement, et

dans lequel le deuxième moteur (105b) est également configuré pour modifier la position d'au moins l'un du troisième (103c) et du quatrième (103d) réflecteur d'angle dans la deuxième direction de mouvement le long de la direction de réflexion vers le radar (111).

5. Dispositif (100) selon l'une quelconque des revendications 1 à 3, dans lequel la pluralité de réflecteurs d'angle (103a-d) comprend également un troisième (103c) et un quatrième (103d) réflecteur d'angle pour réfléchir les ondes électromagnétiques du radar (111) le long de la direction de réflexion vers le radar (111), et dans lequel le dispositif (101) comprend également un troisième moteur (105c) configuré pour modifier la position d'au moins l'un du troisième (103c) et du quatrième (103d) réflecteur d'angle dans la troisième direction de mouvement perpendiculaire à la direction de réflexion vers le radar (111) et perpendiculaire à la première direction de mouvement, et un quatrième moteur (105d) configuré pour modifier la position d'au moins l'un du troisième (103c) et du quatrième (103d) réflecteur d'angle dans la deuxième direction de mouvement le long de la direction de réflexion vers le radar (111).

6. Dispositif (100) selon l'une quelconque des revendications précédentes, dans lequel au moins certains de la pluralité de réflecteurs d'angle (103a-d) ont des tailles différentes.

7. Dispositif (100) selon la revendication 5, comprenant également une plaque d'absorption (201) ayant une surface avant qui est recouverte d'un matériau absorbant pour absorber les ondes électromagnétiques du radar (111), dans lequel la pluralité de réflecteurs d'angle (103a-d) sont disposés sur un côté de la plaque d'absorption (201) avec la surface avant et les premier, deuxième, troisième et/ou quatrième moteurs (105ad) sont disposés sur un autre côté opposé de la plaque d'absorption (201).

8. Dispositif (100) selon la revendication 7, dans lequel la plaque d'absorption (201) définit une ou plusieurs fentes (205a, b), dans lequel chacun de la pluralité réflecteurs d'angle (103a-d) est configuré pour être déplacé le long d'une fente respective parmi les une ou plusieurs fentes (205a, b).

9. Dispositif (100) selon la revendication 7 ou 8, comprenant également une crémaillère mobile (207) avec des rouleaux (209a-c) agencés dans une partie inférieure de la crémaillère mobile (207), dans lequel la plaque d'absorption (201), la pluralité de réflecteurs d'angle (103a-d) et le premier, le deuxième, le troisième et/ou le quatrième moteur (105a-d) sont montés sur la crémaillère (207).

10. Dispositif (100) selon l'une quelconque des revendications précédentes 4 à 9, comprenant également une ou plusieurs plaques de recouvrement (203a-d) configurées pour recouvrir la pluralité de réflecteurs d'angle (103a-d) dans une position de stationnement, dans lequel les une ou plusieurs plaques de recouvrement (203a-d) sont constituées d'un matériau destiné à absorber les ondes électromagnétiques du radar (111).

11. Dispositif (100) selon l'une quelconque des revendications 5 et 7 à 9, dans lequel le deuxième moteur (105b) et/ou le quatrième moteur (105d) sont configurés pour modifier la position d'au moins l'un de la pluralité de réflecteurs d'angle (103a-d) dans la deuxième direction de mouvement avec une taille de pas inférieure à 100 microns le long de la direction de réflexion vers le radar (111).

**12.** Dispositif (100) selon l'une quelconque des revendications 5, 7 à 9, et 11, dans lequel le premier moteur (105a) est configuré pour ajuster la position d'au moins l'un du premier (103a) et du deuxième (103b) réflecteur d'angle pour modifier la première distance entre le premier (103a) et le deuxième (103b) réflecteur d'angle dans la première direction perpendiculaire à la direction de réflexion vers le radar (111) avec une taille de pas d'au moins 10 millimètres, et/ou dans lequel le premier moteur (105a) et/ou le troisième moteur (105c) sont configurés pour ajuster la position d'au moins l'un du troisième (103c) et du quatrième (103d) réflecteur d'angle pour modifier une distance entre le troisième (103c) et le quatrième (103d) réflecteur d'angle dans la troisième direction de mouvement perpendiculaire à la direction de réflexion vers le radar (111) avec une taille de pas d'au moins 10 millimètres.

**13.** Dispositif (100) selon l'une quelconque des revendications précédentes, dans lequel le dispositif de commande (101) est configuré pour envoyer un signal au radar (111), dans lequel le signal déclenche le radar (111) pour transmettre des ondes électromagnétiques vers la pluralité de réflecteurs d'angle (103a-d) et/ou dans lequel le signal indique également un ou plusieurs paramètres radar, les un ou plusieurs paramètres radar définissant une forme d'onde des ondes électromagnétiques à transmettre par le radar (111) vers la pluralité de réflecteurs d'angle (103a-d).

**14.** Procédé (600) de détermination de la résolution angulaire d'un radar (111), comprenant :

la commande (601), par un dispositif de commande (101), d'un premier moteur (105a) et d'un deuxième moteur (105b) pour positionner un premier (103a) et/ou un deuxième (103b) réflecteur d'angle d'une pluralité de réflecteurs d'angle (103ad) pour réfléchir des ondes électromagnétiques du radar (111) le long d'une direction de réflexion vers le radar (111) ;
l'ajustement (603) de la position d'au moins l'un du premier (103a) et du deuxième (103b) réflecteur d'angle par le premier moteur (105a) pour modifier une première distance entre les premier (103a) et deuxième (103b) réflecteurs d'angle dans une première direction de mouvement perpendiculaire à la direction de réflexion vers le radar (111) ; et
l'ajustement (605) de la position d'au moins l'un du premier (103a) et du deuxième (103b) réflecteur d'angle par le deuxième moteur (105b) pour modifier une seconde distance entre les premier (103a) et deuxième (103b) réflecteurs d'angle dans une deuxième direction de mouvement le long de la direction de réflexion vers le radar (111) ;
le positionnement du premier (103a) et/ou du deuxième (103b) réflecteur d'angle pour une pluralité de premières distances et/ou une pluralité de secondes distances ; **caractérisé en ce que** le procédé comprend également :

la réception (607), par le dispositif de commande (101), d'informations de mesure de réflexion provenant du radar (111) pour la pluralité des premières distances et/ou la pluralité des secondes distances ; et
la détermination (609), par le dispositif de commande (101), de la résolution angulaire du radar (111) sur la base des informations de mesure de réflexion reçues du radar (111).

**15.** Produit de programme informatique comprenant un support de stockage lisible par ordinateur pour stocker un code de programmation qui amène le dispositif de commande à réaliser le procédé (600) selon la revendication 14 lorsque le code de programmation est exécuté par un ordinateur ou un processeur du dispositif de commande.

Fig. 1

Fig. 2

EP 4 285 140 B1

EP 4 285 140 B1

300

a

$L = a \sqrt{2}$

Fig. 3

Fig. 4

Fig. 5

600

| Controlling a first motor and a second motor for positioning a first and/or a second corner reflector | 601 |
| Adjusting the position of at least one of the first and the second corner reflector by the first motor | 603 |
| Adjusting the position of at least one of the first and second corner reflector by the second motor | 605 |
| Receiving reflection measurement information from the radar | 607 |
| Determining the angular resolution of the radar | 609 |

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 208060700 U

- CN 111645090 A